# EUROPEAN PATENT SPECIFICATION

(11) **EP 3 066 793 B1**
(45) Date of publication and mention of the grant of the patent: **19.06.2019**
(21) Application number: 14809979.9
(22) Date of filing: 29.10.2014
(51) Int. Cl.: H04L 12/58

(54) **A MANAGEMENT SYSTEM FOR THE EXCHANGE OF MESSAGES**
VERWALTUNGSSYSTEM ZUM AUSTAUSCH VON NACHRICHTEN
SYTÈME DE GESTION POUR L'ÉCHANGE DE MESSAGES

(30) Priority: 04.11.2013 IT VR20130235; 04.11.2013 IT VR20130236
(43) Date of publication of application: 14.09.2016
(73) Proprietor: Tweppy S.r.l., 38017 Mezzolombardo (Trento) (IT)
(72) Inventor: BETTIN, Marco, 38012 Taio (Trento) (IT)
(74) Representative: Anselmi, Davide
(86) International application number: PCT/IB2014/065684
(87) International publication number: WO 2015/063698

(56) References cited:
- US-A1- 2004 221 295
- US-A1- 2007 038 710
- US-A1- 2007 226 297
- US-A1- 2011 145 346

## Description

This invention relates to a management system for the exchange of messages. More specifically, this invention relates to a system for the exchange of messages between at least one sender and at least two recipients. Preferably, this invention relates to a system for managing the exchange of electronic mail messages, but it might also be applied in other sectors in the field of the exchange of messages such as, for example, in systems for managing the exchange of SMS (short message service) messages.

Thus, the following description will deal mainly with the system for managing messages with reference to electronic mail, but without excluding the possibility of using the management system in other sectors (such as that of the SMS messages).

More specifically, with reference to the electronic mail sector, this invention relates to an electronic mail client designed for managing one or more mail accounts. In general, the main function of this electronic mail client is that of receiving and sending electronic mail messages.

According to the prior art, an electronic mail management system comprises one or more servers on which are defined at least two electronic mail boxes. More specifically, each electronic mail box is associated with a respective e-mail address.

In other words, a first electronic mail box is associated with a first e-mail address whilst a second electronic mail box is associated with a second e-mail address.

Moreover, a known system comprises at least one client interface operatively connected to the electronic mail server by means of an information technology network and enabled to access both the electronic mail boxes by means of the server. In the preferred embodiment, the client interface is defined by an electronic client device such as, for example, a PC or a smartphone or tablet PC or other system not expressly indicated.

More specifically, the client interface is designed to read the electronic mail messages received both at the first box and at the second box. In other words, this system presupposes that there are several electronic mail boxes (each represented by a respective e-mail address) associated with a same user (represented physically by an electronic client device).

More specifically, in the prior art management system the server makes available for reading each message which arrives at a respective electronic mail box.

Consequently, if an electronic client device is designed to read the electronic mail messages received at two different electronic mail boxes, it will display both the messages on the server.

However, this known technology has certain drawbacks.

In effect, the user, who views two electronic mail boxes on the relative electronic client device, sees a same message duplicated. In that way, the presence of two or more duplicated messages generates confusion in the management of the electronic mail by a user.

In addition, a further drawback is linked the data traffic which is generated at the server and between the server and the client interface. In effect, when the user decides to view the contents of the messages (for example, to check that they are effectively identical to each other) and/or to download the attachments, "duplicated" data flow is generated in relation to two mails visible to the same client interface.

Moreover, a known system may comprise two or more client interfaces operatively connected to the electronic mail server by means of an information technology network to access a same electronic mail box by means of the server. More specifically, each client interface is designed to read the electronic mail message on the server. In other words, this system presupposes that there are several users (each represented by a respective client interface) who access the server by means of the information technology network for reading the same electronic mail message.

More specifically, the exchange of a message on the Internet in the prior art occurs, mainly, in two ways: by "POP" protocol or by "IMAP" protocol. In the exchange of messages (hereafter also called "mail") using the "POP" protocol, the mail is received on the server at a electronic mail box and as many copies are produced as there are the recipients enabled to view the electronic mail box. Each copy of the mail is then forwarded to the respective recipient. More specifically, the mail is copied on an electronic client device in such a way that each of them can read and act on the relative mail.

However, this known technology has certain drawbacks.

More specifically, a first drawback is linked to the data traffic which occurs between the server and the client interface. In effect, several copies of the message are made and each is downloaded on the client interface for viewing. Consequently, for a single mail the data traffic is multiplied according to the number of client interfaces associated with it. This problem can become even more problematic if it concerns large data messages.

With regard to the exchange of messages by "IMAP" protocol, the message is stored on the server at the electronic mail box, but it is not copied for the respective client interfaces. In effect, in the "IMAP" system, the message remains on the server and the client interfaces access it by means of the information technology network. In other words, the message is unique (safeguarding the data traffic) and is read by more than one user. Some examples are known from documents US 2004/0221295 and US 2007/0226297 in which are disclosed respective systems for messages redundancy and for stopping spam.

However, this prior art technique also has several drawbacks linked, mainly, to the fact that if a user performs an action on the message all the users who see the same mail box suffer the consequences. For this without having yet read it.

In addition, if the message is read or a reply to it is generated by a user, the other users will not know who has performed the operations.

In this situation the aim of this invention is to provide a system for the management of electronic mail which overcomes the aforementioned drawbacks.

More specifically, the aim of this invention is to provide a system for managing the exchange of messages which simplifies the management of two or more messages which are the same received in different message boxes but visible to a same client interface.

More in detail, the aim of this invention is to provide a system for managing the exchange of messages which streamlines the data traffic present between the server and the client interface.

Another aim of this invention is to provide a system for managing the exchange of messages which optimises the actions on a same message viewed by several client interfaces.

Lastly, the aim of this invention is to provide a system for managing the exchange of messages which makes the operations of the client interfaces on a message independent of each other but shareable by several users.

The aims indicated are substantially achieved by a management system for the exchange of messages as described in the appended claims.

Further characteristic features and advantages of this invention will emerge more clearly from the detailed description of several preferred, but not exclusive embodiments of a management system for the exchange of messages illustrated in the accompanying drawings, in which: More specifically:
- Figure 1 shows a schematic view of the management system for the exchange of messages according to this invention;
- Figure 2 shows a schematic view of further additional features compared with that shown in Figure 1; and
- Figure 3 shows a schematic view of other features not shown in Figure 3 of the management system for the exchange of messages according to this invention.

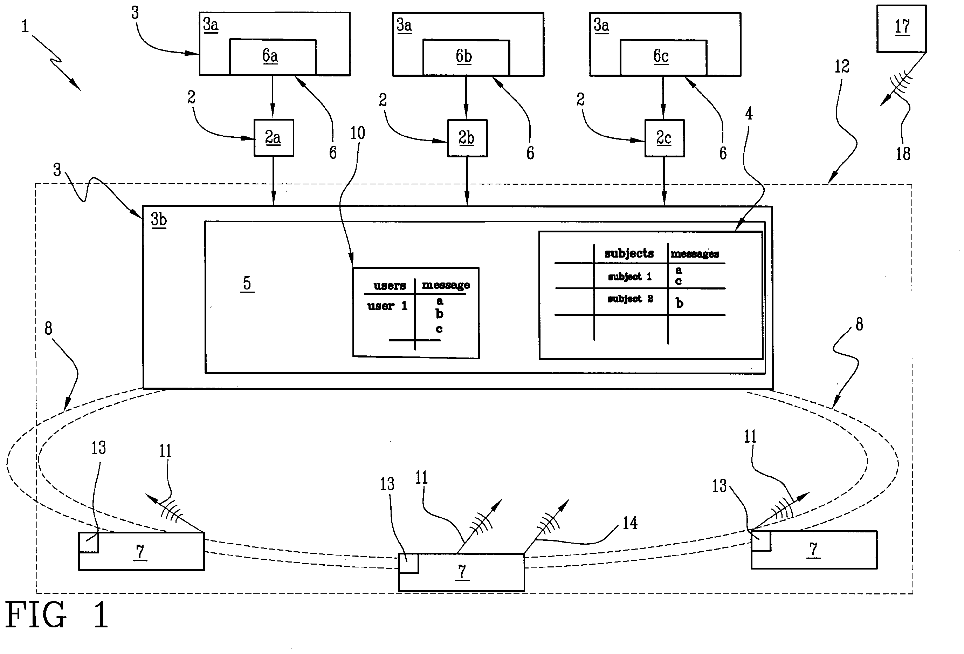

More specifically, Figure 1 shows a schematic view of the management system for the exchange of messages according to this invention.

With reference to the above-mentioned drawing, the reference numeral 1 denotes in its entirety a management system 1 for the exchange of messages 2 according to this invention.

More specifically, as already indicated above, the management system 1 for the exchange of messages 2 is preferably applied in the field of electronic mail management. For this reason, the preferred embodiment will be described below with reference to the electronic mail sector, but without thereby excluding that this invention may also be applied in other sectors (for example "SMS" messaging).

More specifically, the management system 1 comprises one or more electronic mail servers 3 on which are defined at least two electronic mail boxes 6a, 6b as shown in Figure 1.

Looking in more detail, each electronic mail box 6a, 6b is associated with a respective identification address necessary to identify the recipient. In other words, the address is a code which unequivocally identifies one or more users as recipients of a respective message 2. In the case of electronic mail, the address is normally in the form of "username@domain. _ _ ". The address may be real or imaginary, such as a "alias" electronic mail box.

It should be noted that in the preferred embodiment, the system comprises a first server 3a in which the electronic mail boxes 6a, 6b are defined and a second server 3b, operatively connected to the first server 3a, comprising a reception module 5 designed to receive each message 2 which arrives from the electronic mail boxes 6a, 6b.

In other words, the reception module 5 receives one or more electronic mail messages coming from the boxes 6a, 6b.

Moreover, the management system 1 comprises at least one client interface 7 operatively connected to the server 3 by means of a data exchange network 8 and enabled to access the two boxes 6a, 6b of messages 2 by means of the server 3.

It should be noted that the reception module 5 is enabled to access the two boxes 6a, 6b to access the contents of the messages 2. In addition, the interface 7 is designed to access the two boxes 6a, 6b by means of the reception module 5. More in detail, the client interface 7 is designed to make visible to a user each message 2a, 2b.

More specifically, the client interface 7 is operatively connected to the second server 3b to display the messages 2 provided by the server 3b coming from the boxes 6a, 6b by means of the reception module 5.

In other words, the client interface 7 displays the contents of both the electronic mail boxes 6a, 6b.

It should be noted that the number of client interfaces 7 may be a number greater than one as shown in the accompanying drawings. In that case, according to this invention, each client interface 7 displays at least two electronic mail boxes 6a, 6b.

More specifically, the exchange network 8 also acts as a data connection between the first server 3a to the second server 3b.

Preferably, the data exchange network 8 is the Internet network 8, but it could also be a local network 8 or other network not expressly mentioned herein.

In other words, the second server 3b is designed to receive the messages 2 by means of the reception module 5, whilst the interface 7 is designed to connect to the reception module 5 and to display the messages received.

More in detail, in a first embodiment, the interface 7 is designed to connect to the second server 3b (and in particular to the reception module 5) using a program 12 (software) for connectivity to the network 8 such as, for example, a browser. In a second embodiment, each client interface 7 is designed to connect to the second server 3b (and in particular to the reception module 5) using a program 12 (software) specifically for displaying the electronic mail box 6a, 6b, 6c.

In any event, the client interface 7 is designed to read the message 2 on the second server 3b and to show it to a user.

More specifically, it is hereafter assumed that the client interface 7 is enabled to display at least two electronic mail boxes 6a, 6b. As already mentioned, the reception module 5 is enabled to receive the messages 2a, 2b preferably by means of a user name and a password. Whilst the client interface 7 is enabled to access the reception module 5 by means of appropriate identification keys.

In other words, it is the reception module 5 or the program 12 which has the password codes and whatever else necessary to access the two electronic mail boxes 6a, 6b.

It should be noted that the management system 1 preferably comprises an electronic client device for graphically displaying a respective interface 7. More in detail, the electronic client device preferably comprises a computer and/or a smartphone and/or a tablet PC and/or whatever else not expressly mentioned herein.

According to this invention, the management system 1 is designed for:
detecting the identification information of each message 2a, 2b representative of an identifying part of the respective message 2a, 2b;
comparing the identification information of the first message 2a with the reception information of the second message 2b;
if the identification information relating to the first message 2a and to the second message 2b matches, making the content of one of the two messages 2a, 2b accessible to the client interface by means of the data exchange network 8.

It should be noted that each message 2 comprises an identifying part and a part of the content. The identifying part comprises information relating to the address of the sender and/or data relating to the moment in time when it was sent and/or data relating to the place from where it was sent and/or data relating to the subject of the message 2 and/or any other identification code (for example, ASCII code or other) which might have been associated with the message 2.

In other words, the identifying part of a message 2 is representative of the data relating to the sender and/or the data relating to the moment in time when it was sent and/or the data relating to the place from where it was sent and/or the data relating to the subject of the message 2.

The contents part of the message 2 is representative of the actual contents of the message 2 which comprises text and/or images and/or videos and/or audio and/or other contents not expressly indicated. For example, the part of the content of the message 2 may comprise attached files.

In more detail, the management system is designed to associate an identification code with each message 2. The identification code depends on the identification information detected.

In other words, the identification code comprises a plurality of symbols (letters and/or numerals) which are established as a function of the information present on the identifying part of the message 2. For example, if the message 2 arrives from a particular user, a part of the identification code will be defined by a sequence of three symbols. If the message arrives at a predetermined time, another part of the identification code will be defined by a sequence of another three symbols.

In this way, the management system 1 is designed for:
comparing the identification code of the first message 2a with the identification code of the second message 2b;
if the identification codes match, making the content of one of the two messages 2a, 2b accessible to the client interface 7 client by means of the reception module 5 or by means of the data exchange network 12.

In other words, if the identification codes match, this means that the messages 2a, 2b are the same. Consequently, the management system 1 operates with only one of the two messages 2a, 2b.

It should be noted that the reception module 5 is designed to receive, and if necessary store, the identification part of each message 2a, 2b, in such a way as to perform the comparison.

In other words, specifically, it is the reception module 5 which is designed for detecting the identification information of each message 2a, 2b and for comparing it to each other.

Moreover, if the reception information relative to the first message 2a and the second message 2b match, the system is designed for storing at least part of the content of one of the two messages on the second server 3b. In that way, the message is viewable and, if necessary, downloadable from the client interface 7.

In that case, it should be noted that the system is designed to check if the address of the message 2 is present in an address book memory 13 of the client interface 7 and to automatically store at least part of the content of one of the two messages 2 on the second server 3b.

Moreover, the management system 1 is designed to determine whether the messages relate to a same subject and/or to a same sender to create a conversation.

In that sense, the management system 1 is designed for:
detecting the subject of each message 2;
comparing the subject of one message 2a, 2b with the subject of other messages previously received, for checking if there are parts in common;
if there are parts in common, linking the message 2a, 2b with the other messages previously received to create a conversation.

It should be noted that the subject of the message is defined by the header part of the content of each message. More specifically, the subject of the message may comprise an initial part defined by the codes "re" and/or "fwd" and/or another not expressly indicated herein. The initial part of the subject is detected by the management system 1 to understand if a new message relates to a same conversation.

More in detail, the system is designed for:
detecting the subject of each message 2;
comparing the subject of one message 2 with the subject of at least part (preferably all) of the messages belonging to a conversation in progress for checking if there are parts in common;
if there are parts in common, linking the message 2 with the conversation is in progress.

More specifically, the second server 3b comprises a first association module 4 designed to associate to a subject a plurality of messages 2, as shown in Figure 1.

It should be noted that the first association module 4 is further designed to associate to a conversation also other messages 2 (not having a subject in common) on the specific request of the client interface 7.

Moreover, the first association module 4 is designed to associate to a subject other types of data not of an electronic mail nature, such as, for example, internal notes, diaries, documents, files in general.

In addition, the client interface 7 is also designed to send a share signal 11 to the server 3 for sharing the message 2 with at least one other client interface 7 which is not associated with the address of the message 2. More specifically, the second server 3b is designed for receiving the share signal 11 and making the relative message accessible to the other client interface 7. In that way, it is possible to make a user a participant in one or more messages 2 for which that user was not a specific recipient. In other words, the second server 3b makes the messages 2 accessible to the client interface 7 used by the user who was not a specific recipient. In addition, the second server 3b is designed to also make accessible to the client interface 7 all the messages belonging to the conversation of which the shared message is part. In other words, the user (who was not a specific recipient) may also view the entire conversation to which the message which has been shared belongs.

In that sense, the second server 3b comprises a second module 10 for associating a message 2 to the users who are recipients of the message 2. More specifically, the second association module 10 is designed for:
- identifying an electronic mail message 2 (for example, by means of the identification code),
- identifying the recipients of the message 2.

Moreover, the second server 3b is designed for:
- receiving the share signal 11;
- updating the contents of the second association module 10 as a function of the contents of the share signal 11.

In that way, the second server 3b is updated to be able to make available certain messages 2 to other users who were not originally specific recipients of the message 2.

It should also be noted that the client interface 7 is also designed to send an external share signal 14 to the server 3 for sharing a message 2 or a conversation (entirely or partly) or other types of data not of an electronic mail nature (for example, internal notes, diaries, documents, files in general) with a user 17 external to the management system 1. In other words, the client interface 7 is designed to share, by means of the server 3, a message 2 or other with a user 17 outside the system 1. Preferably, the sharing occurs by sending a connecting address (link) to the external user 17 by means of the server 3.

The external user 17 accesses the contents of the external share signal 14 by means of access to the server 3.

In addition, the user 17 external to the system may in turn interact with the client interface 7 or with the users involved in the shared conversation, forwarding suitable interaction signals 18 to the server 3.

In other words, the management system 1 can set up a two-way connection with an external user 17 in order to share with the latter messages, data or other documents.

The external user 17 is in this case represented by a client interface external to the management system 1.

In addition, the reception module 5 is designed for generating a warning signal as a function of the fact that a user is connected to the reception module 5. More specifically, each client interface 7 is designed for receiving the warning signal in such a way as to display the users who are connected to the reception module 5 and, therefore, in line with the server 3.

Lastly, it should be noted that the number of messages 2 and the number of boxes 6 may be greater than two (for example three) as shown in the accompanying drawing. More specifically, in Figure 1 the messages are denoted with the numerals 2a, 2b, 2c and the boxes are denoted with the numerals 6a, 6b and 6c.

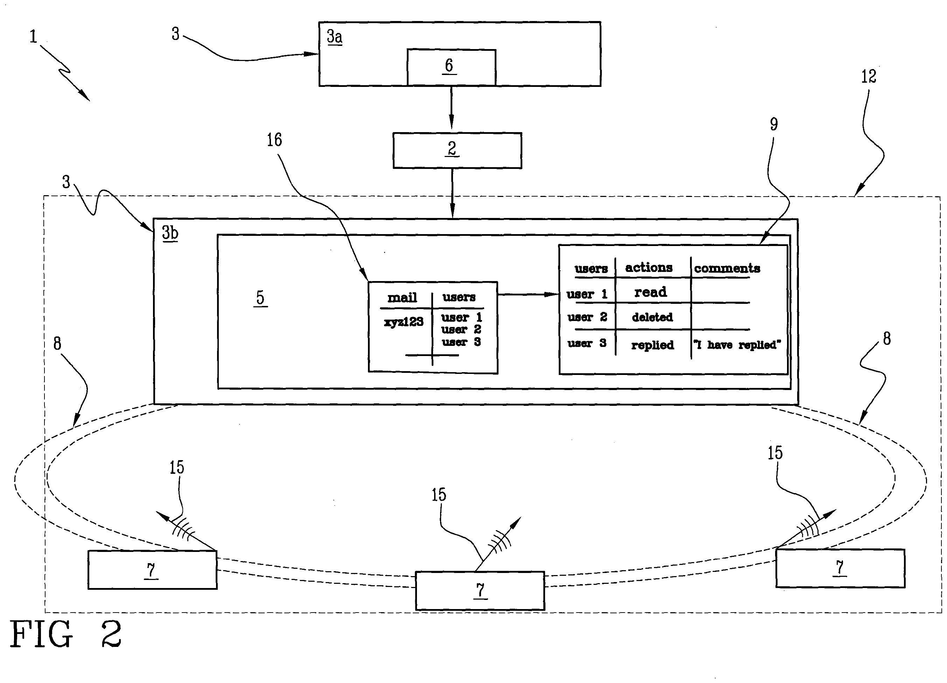

With regard to the embodiment illustrated in Figure 2, the management system 1 comprises at least two client interfaces 7 operatively connected to the server 3 by means of the data exchange network 8 and enabled to access a same box 6 of messages 2. More specifically, the client interfaces 7 are operatively connected to the second server 3b to display the messages 2 provided by the server 3b coming from the box 6 by means of the reception module 5.

In other words, each client interface 7 is enabled to display the contents of the same electronic mail box 6.

More in detail, in a first embodiment, each interface 7 is designed to connect to the second server 3b using the program 12 (software) for connectivity to the network 8 such as, for example, a browser. In a second embodiment, each client interface 7 is designed to connect to the second server 3b using the program 12 (software) specifically for displaying the electronic mail box 6a, 6b, 6c.

More specifically, it is hereafter assumed that each client interface 7 is enabled to display the electronic mail box 6. In other words, it is the server 3b or the program 12 which has the password codes and whatever else necessary to access the electronic mail box. Each interface 7 has passwords for accessing the server.

According to this invention, the management system 1 is designed for associating with the message 2 received on the server 3 a memory register 9 containing a plurality of data determined depending on the actions performed by each client interface 7 on the message 2. In other words, the server 3 comprises the memory register 9 in which are stored the data relating to the actions performed by each client interface 7 on the message 2. Figure 2 shows that the memory register 9 is part of the reception module 5.

Preferably, the memory register 9 is a database managed by a client-server type architecture wherein the "server" is the second server 3b.

More specifically, the data are divided by user in order to store which client interface 7 has performed a particular action on a message 2.

More in detail, the management system 1 is designed to make the memory register 9 accessible to each client interface 7 by means of the information technology network 8. In still more detail, each client interface 7 is designed to read the contents of the memory register 9 and modify the contents.

Mainly, the data contained in the memory register 9 comprise data relating to reading of the message 2, deleting of the message 2, replying to the message 2 and other actions not explicitly mentioned herein.

Figure 2 shows an example of access to the memory register 9 by the client interfaces 7 (in Figure 2 there are three client interfaces 7). More specifically, if a first client interface 7 reads a message 2, the memory register 9 stores the action of reading the message 2 by the first interface 7.

Consequently, the other client interfaces 7 (second interface 7 and third interface 7) view the memory register 9 and, more specifically, see the data relating to the fact that the first user has read the message 2. However, the message 2 does not undergo modifications, especially in the appearance (in some prior art, once the message 2 has been read by at least one user it adopts a different graphical appearance), and remains stored in the electronic mail box 6.

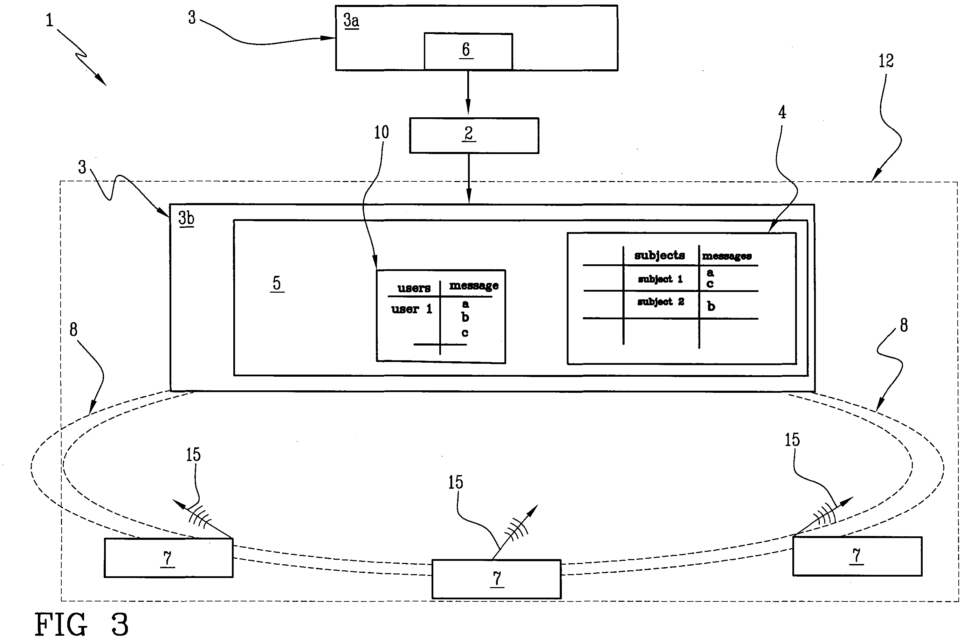

Continuing the description of the example of Figure 3, if the second client interface 7 deletes the message 2, the message 2 is no longer visible from the second client interface 7, and the memory register 9 stores the data relating to the deleting of the message 2 by the second client interface 7. In that way, the first client interface 7 and the third client interface 7 see (by access to the memory register 9) that the second client interface 7 has deleted the message 2.

Also, if the third client interface 7 replies to the message 2, the memory register 9 stores the data relating to the reply to the message 2 by the third client interface 7. In that way, the first client interface 7 and the second client interface 7 see (by access to the memory register 9) that the third client interface 7 has replied to the message 2.

In other words, the memory register 9 is preferably divided according to a tabular structure having a column listing the users associated with a mail box 6 and a column listing the actions performed by the respective users (by means of the respective client interfaces 7) in relation to a message 2.

In that way, the management system 1 advantageously makes it possible to identify the actions performed by the client interfaces 7 on a same electronic mail message 2 by means of sharing the memory register 9. In other words, the data contained in the memory register 9 are shared between the client interfaces 7.

In addition, each client interface 7 is designed to send a change signal 15 indicating a change in a data item contained in the memory register 9 to the server 3 depending on the actions performed on the message 2. In other words, each time a client interface 7 performs an action on a message 2, a change signal 15 containing the information performed by the client interface 7 on the message 2 is sent to the memory register 9. In that way, the memory register 9 is designed to receive the change signal 15 and to modify, consequently, the respective data.

In any case, it should be noted that the server 3 is not designed to generate as many copies of the message 2 as there are client users enabled to access the memory register 9 where the message 2 has arrived.

It should also be noted that the communication protocol between the client interfaces 7 and the server 3 is of the client/server type (known protocol which is not described below in detail).

Further, it should be noted that the data contained in the register comprise, in addition to the data relating to the actions of the users, data relating to the exchange of comments between the client interfaces 7. In other words, the memory register 9 is designed to store the comments entered by the client interfaces 7.

In yet other words, each client interface 7 is designed to send a signal 15 for change of data (in this case the data relative to the comments) contained in the memory register 9, which will be made available between the client interfaces 7 enabled to access the same electronic mail box 6 by means of the server 3.

Advantageously, the exchange of comments allows a communication between the users in relation to a message 2 received on the mail box 6.

Preferably, the memory register 9 is designed to create a chronological sequence of the comments relating to a message 2 or a group of messages 2 (for example, with reference to a conversation) accessible to each interface 7 in such a way as to improve the management of the messages.

In addition, the data contained in the register comprise data relating to a possible re-naming of a message 2 and/or connections to other messages 2 relative to the same subject and/or other aspects not expressly indicated.

It should also be noted that the server 3 comprises a third module 16 for associating a message 2 to the users who are recipients of the message 2. More specifically, the module is designed for:
- identifying an electronic mail message 2 (for example, with an alphanumeric code),
- identifying the recipients of the message 2,
- sending a signal to the memory register 9 containing the information that the data contained in the memory register 9 in relation to a message 2 are accessible by the client interfaces 7 corresponding to the users identified.

In other words, the third association module 16 is operatively connected to the memory register 9 for providing details regarding the users who can share the data in relation to a message 2.

This invention also relates to a method for managing the exchange of messages 2. More specifically, the method is derived directly from what is described above with regard to the management system 1, which is here below incorporated in its entirety.

More specifically, the method comprises a first step which comprises receiving the first message 2a in the first box 6a located on the first server 3a. The method then comprises receiving the second message 2b different from the first message 2a in the second box 6b located on the first server 3a and different from the first box 6a.

In addition, the method comprises a step wherein the second server 3b accesses the first server 3a to read the contents of each box 6. More specifically, the reception module 5 receives the messages on the second server 3b.

Moreover, the second server 3b detects the identification information of each message 2a, 2b representative of the identifying part of the respective message 2a, 2b. More specifically, it should be noted that the step of detecting the identification information of each message 2a, 2b comprises detecting the data relating to the sender and/or the data relating to the moment in time when it was sent and/or the data relating to the place from where it was sent and/or the data relating to the subject of the message 2a, 2b.

In addition, the method comprises the step of comparing the identification information of the first message 2a with the identification information of the second message 2b.

If the identification information relating to the first message 2a and to the second message 2b matches, the content of only one of the two messages 2a, 2b is made available to the client interface 7 by means of the reception module 5.

With reference to Figure 3, the method comprises a first step wherein a message 2 is received in the memory register 9 of the electronic mail box 6 located on the server 3. The message 2 is then analysed to identify users who are recipients of the message 2.

Moreover, the method comprises sharing a part of the memory register 9 between the client interfaces 7 who are recipients of the message 2. At the same time, the message 2 is made visible to the recipients, but it is not copied to the client interfaces 7.

The method then comprises storing in a memory register 9 a plurality of data determined depending on the actions performed by each client interface 7 on the message 2 received. More specifically, the actions may comprise, the reading of a message 2, the deleting, the replying, etc. Moreover, the memory register 9 may store data relating to comments made by the users in relation to a same message 2.

More in detail, the memory register 9 is made accessible to each client interface 7 by means of the information technology network 8.

Lastly, this invention also comprises a computer program 12, stored on a non-volatile memory medium and susceptible of being run by an electronic client device on which the client interface 7 is present, for causing the execution of the steps of the method describe above. More specifically, the program 12 is a software comprising a part performed by the electronic client device wherein there are one or more client interfaces 7 and a part performed by the second server 3b (dashed square in Figure 1).

The invention achieves the preset aims.

More specifically, the system described above allows the management of equal messages coming from the separate electronic mail boxes, but addressed to at least one recipient maintaining a single message by the comparison of the identifying part of the message. In that way, the recipient user perceives the presence of a single message and a more simplified system for management of the messages is defined.

Moreover, since a single message is identified instead of two equal messages addressed to the same recipient, it is possible to reduce the quantity of data traffic present between the second server and the client interface.

In addition, the system described above avoids the systematic downloading of the electronic mail messages 2 by the server 3 to the client interfaces 7, enabled to see a predetermined mail box 6, in a similar manner to an IMAP type protocol. However, according to this invention, the use of a memory register 9 on the server 3 allows the sharing of actions, comments and other information between the users who are recipients of a same electronic mail message 2 in such a way as to "synchronise" the actions of the users on the same message 2.

In that way, there is increased efficiency in the management of the messaging system since each user can know the actions of the other users in relation to a same electronic mail message 2.

It should also be noted that this invention is relatively easy to implement and that the cost of implementing the invention is relatively low.

## Claims

1. A management system (1) for the exchange of messages (2) each comprising an identifying part and a content part, comprising:
at least one server (3) overall comprising at least two boxes (6a, 6b) of messages (2) each associated with a respective identification address; said server (3) being designed to receive a first message (2a) from a first box (6a) and a second message (2b) from a second box (6b);
at least two client interfaces (7) operatively connected to the server (3) by means of a data exchange network (8) and enabled to access the same box of the two boxes (6a, 6b) of messages (2) by means of the server (3); each client interface (7) being designed to read each message (2a, 2b) on the server (3);
said management system (1) being designed for:
- detecting the identification information of each message (2a, 2b) representative of the identifying part of the respective message (2a, 2b);
- comparing the identification information of the first message (2a) with the reception information of the second message (2b);
- if the identification information relating to the first message (2a) and to the second message (2b) matches, storing the content part of only one of the two messages (2a, 2b) on the server (3) and making said content part stored accessible to each client interface (7) by means of the data exchange network (8);
each client interface (7) being designed to access the same message (2) on the server (3) and to make it displayable to a user;
**characterized by** said management system (1) being designed for:
associating with the message (2) received on the server (3) a memory register (9) containing a plurality of data determined depending on the actions performed by each client interface (7) on the message (2);
making said memory register (9) accessible to each client interface (7) by means of the data exchange network (8); wherein
said memory register (9) containing for each client interface (7) the data relating to the actions performed by the client interface (7) on the message (2); and by each client interface (7) being designed to:
send a change signal (15) indicating a change in a data item contained in the memory register (9) to the server (3) depending on the actions performed on the message (2);
read the contents of the memory register (9) and modify the contents.

2. The management system (1) according to claim 1, **characterised in that** the identifying part of a message (2a, 2b) is representative of the data relating to the sender and/or the data relating to the moment in time when it was sent and/or the data relating to the place from where it was sent and/or the data relating to the subject of the message (2a, 2b) and/or any other identification code associated with the message (2a, 2b).

3. The management system (1) according to any one of the preceding claims, **characterised in that** the management system is designed to associate an identification code with each message (2a, 2b); said identification code depending on the detected identification information.

4. The management system (1) according to claim 3, **characterised in that** the management system is designed for:
comparing the identification code of the first message (2a) with the identification code of the second message (2b);
if the identification codes match, making the content of one of the two messages (2a, 2b) accessible to each client interface (7) by means of the data exchange network (8).

5. The management system (1) according to any one of the preceding claims, **characterised in that** the system (1) is designed for storing at least part of the content of one of the two messages on the server (3), if the reception information relating to the first message (2a) and to the second message (2b) match.

6. The management system (1) according to claim 5, **characterised in that** the system (1) is designed for:
checking if the address of the message is present in an address book memory (13) of a client interface (7);
if the address of the message (2a, 2b) is present in the address book memory (13) of a client interface (7), storing at least part of the content of one of the two messages (2a, 2b) on the server (3).

7. The management system (1) according to any one of the preceding claims, **characterised in that** the system (1) is designed for:
detecting the subject of each message (2a, 2b);
comparing the subject of one message (2a, 2b) with the subject of other messages previously received, for checking if there are parts in common;
if there are parts in common, linking the message (2a, 2b) with the other messages previously received to create a conversation.

8. The management system (1) according to any one of the preceding claims, **characterised in that** each client interface (7) is designed to send a share signal (11) to the server for sharing the message (2a, 2b) with at least one other client interface (7) which is not associated with the address of the message (2a, 2b); said server (3) being designed to receive the share signal (11) and to make the related message (2a, 2b) accessible to the other client interface (7).

9. The management system (1) according to any one of the preceding claims, **characterised in that** it comprises a first server (3a) in which the electronic mail boxes (6a, 6b) are defined and a second server (3b), operatively connected to the first server (3a), comprising a reception module (5) designed to receive each message (2) coming from the electronic mail boxes (6a, 6b); said reception module (5) being enabled to access the contents of the messages (2); each client interface (7) being operatively connected to the second server (3b) to display the messages (2) provided by the second server (3b) and coming from the boxes (6a, 6b) through the reception module (5).

10. The management system (1) according to claim 9 **characterised in that** it is designed for storing the content part of only one of the two messages (2) on the second server (3b) if the identification information relating to the first message (2a) and to the second message (2b) matches.

11. The management system (1) according to any one of the preceding claims, **characterised in that** it is designed to download the part of the content stored on each client interface (7).

12. A method for managing the exchange of messages (2a, 2b) each comprising an identifying part and a content part, in which at least one server (3) communicates with at least two client interfaces (7) which are connected to it by means of a data exchange network (8), comprising the following steps:
receiving a first message (2a) in a first box (6a) of messages located on the server (3);
receiving a second message (2b) which is different to the first one in a second box (6b) of messages located on the server (3) and different to the first box;
detecting the identification information of each message (2a, 2b) representative of the identifying part of the respective message (2a, 2b);
comparing the identification information of the first message (2a) with the identification information of the second message (2b);
if the reception information relating to the first message (2a) and to the second message (2b) matches, storing the content part of only one of the two messages (2a, 2b) on the server (3) and making said content part stored accessible to each client interface (7) by means of the server (3) and the data exchange network (8);
access the same message (2) on the server (3) by each client interface (7) and make it displayable to a user;
**characterized in that** the method comprises the following steps:
associating with the message (2) received on the server (3) a memory register (9) containing a plurality of data determined depending on the actions performed by each client interface (7) on the message (2); wherein said memory register (9) contains for each client interface (7) the data relating to the actions performed by each client interface (7) on the message (2);
making said memory register (9) accessible to each client interface (7) by means of the data exchange network (8);
sending a change signal (15) by each client interface (7) indicating a change in a data item contained in the memory register (9) to the server (3) depending on the actions performed on the message (2);
reading the contents of the memory register (9) and modifying the contents by each client interface (7).

## Patentansprüche

1. Verwaltungssystem (1) zum Austausch von Nachrichten (2), die jeweils einen Identifikationsteil und einen Inhaltsteil umfassen, umfassend:
mindestens einen Server (3), der insgesamt mindestens zwei Postfächer (6a, 6b) von Nachrichten (2) umfasst, die jeweils mit einer jeweiligen Identifikationsadresse assoziiert sind; wobei der Server (3) ausgelegt ist, um eine erste Nachricht (2a) von einem ersten Postfach (6a) und eine zweite Nachricht (2b) von einem zweiten Postfach (6b) zu empfangen;
mindestens zwei Client-Schnittstellen (7), die über ein Datenaustauschnetzwerk (8) mit dem Server (3) betriebswirksam verbunden und aktiviert sind, um auf dasselbe Postfach der beiden Postfächer (6a, 6b) von Nachrichten (2) über den Server (3) zuzugreifen; wobei jede Client-Schnittstelle (7) zum Lesen jeder Nachricht (2a, 2b) auf dem Server (3) ausgelegt ist;
wobei das Verwaltungssystem (1) ausgelegt ist, zum:
- Erfassen der Identifikationsinformation jeder Nachricht (2a, 2b), die für den Identifikationsteil der jeweiligen Nachricht (2a, 2b) repräsentativ ist;
- Vergleichen der Identifikationsinformation der ersten Nachricht (2a) mit den Empfangsinformation der zweiten Nachricht (2b);
- wenn die Identifikationsinformation in Bezug auf die erste Nachricht (2a) und auf die zweite Nachricht (2b) übereinstimmt, Speichern des Inhaltsteils von nur einer der beiden Nachrichten (2a, 2b) auf dem Server (3) und Machen des gespeicherten Inhaltsteils für jede Client-Schnittstelle (7) über das Datenaustauschnetzwerk (8) zugänglich;
wobei jede Client-Schnittstelle (7) ausgelegt ist, um auf dieselbe Nachricht (2) auf dem Server (3) zuzugreifen und sie einem Benutzer anzeigbar zu machen;
**dadurch gekennzeichnet, dass** das Verwaltungssystem (1) ausgelegt ist, zum: Assoziieren eines Speicherregisters (9) mit der auf dem Server (3) empfangenen Nachricht (2), das eine Vielzahl an Daten enthält, die abhängig von den von jeder Client-Schnittstelle (7) auf die Nachricht (2) ausgeführten Aktionen bestimmt sind;
Machen des Speicherregisters (9) für jede Client-Schnittstelle (7) über das Datenaustauschnetzwerk (8) zugänglich; wobei das Speicherregister (9) für jede Client-Schnittstelle (7) die Daten enthält, die sich auf die von der Client-Schnittstelle (7) auf die Nachricht (2) ausgeführten Aktionen beziehen; dadurch, dass jede Client-Schnittstelle (7) ausgelegt ist, zum:
Senden eines Änderungssignals (15), das eine Änderung in einem in dem Speicherregister (9) enthaltenen Datenelement anzeigt, an den Server (3) in Abhängigkeit von den auf die Nachricht (2) ausgeführten Aktionen;
Lesen der Inhalte des Speicherregisters (9) und Ändern der Inhalte.

2. Verwaltungssystem (1) nach Anspruch 1, **dadurch gekennzeichnet, dass** der Identifikationsteil einer Nachricht (2a, 2b) für die Daten repräsentativ ist, die sich auf den Absender beziehen und/oder für die Daten, die sich auf den Zeitpunkt beziehen, zu dem sie gesendet wurde und/oder für die Daten, die sich auf den Ort beziehen, von dem sie gesendet wurde, und/oder für die Daten, die sich auf den Betreff der Nachricht (2a, 2b) und/oder einen anderen Identifikationscode beziehen, die mit der Nachricht (2a, 2b) assoziiert sind.

3. Verwaltungssystem (1) nach einem der vorhergehenden Ansprüche, **dadurch gekennzeichnet, dass** das Verwaltungssystem ausgelegt ist, um einen Identifikationscode mit jeder Nachricht (2a, 2b) zu assoziieren, wobei der Identifikationscode von der erfassten Identifikationsinformation abhängt.

4. Verwaltungssystem (1) nach Anspruch 3, **dadurch gekennzeichnet, dass** das Verwaltungssystem ausgelegt ist, zum:
Vergleichen des Identifikationscodes der ersten Nachricht (2a) mit dem Identifikationscode der zweiten Nachricht (2b);
wenn die Identifikationscodes übereinstimmen, Machen des Inhalts einer der beiden Nachrichten (2a, 2b) für jede Client-Schnittstelle (7) über das Datenaustauschnetzwerk (8) zugänglich.

5. Verwaltungssystem (1) nach einem der vorhergehenden Ansprüche, **dadurch gekennzeichnet, dass** das System (1) ausgelegt ist, um mindestens einen Teil des Inhalts einer der beiden Nachrichten auf dem Server (3) zu speichern, wenn die Empfangsinformation in Bezug auf die erste Nachricht (2a) und auf die zweite Nachricht (2b) übereinstimmt.

6. Verwaltungssystem (1) nach Anspruch 5, **dadurch gekennzeichnet, dass** das System (1) ausgelegt ist, zum:
Prüfen, ob die Adresse der Nachricht in einem Adressbuchspeicher (13) einer Client-Schnittstelle (7) vorhanden ist;
wenn die Adresse der Nachricht (2a, 2b) im Adressbuchspeicher (13) einer Client-Schnittstelle (7) vorhanden ist, Speichern mindestens eines Teils des Inhalts einer der beiden Nachrichten (2a, 2b) auf dem Server (3).

7. Verwaltungssystem (1) nach einem der vorhergehenden Ansprüche, **dadurch gekennzeichnet, dass** das System (1) ausgelegt ist, zum:
Erfassen des Betreffs jeder Nachricht (2a, 2b);
Vergleichen des Betreffs einer Nachricht (2a, 2b) mit dem Betreff anderer zuvor empfangener Nachrichten zum Prüfen, ob Teile gemeinsam sind;
wenn Teile gemeinsam sind, Verknüpfen der Nachricht (2a, 2b) mit den anderen zuvor empfangenen Nachrichten, um eine Konversation zu erstellen.

8. Verwaltungssystem (1) nach einem der vorhergehenden Ansprüche, **dadurch gekennzeichnet, dass** jede Client-Schnittstelle (7) ausgelegt ist, um ein Gemeinschaftssignal (11) an den Server zu senden, um die Nachricht (2a, 2b) mit mindestens einer anderen Client-Schnittstelle (7) zu teilen, die mit der Adresse der Nachricht (2a, 2b) nicht assoziiert ist, wobei der Server (3) ausgelegt ist, um das Gemeinschaftssignal (11) zu empfangen und die zugehörige Nachricht (2a, 2b) für die andere Client-Schnittstelle (7) zugänglich zu machen.

9. Verwaltungssystem (1) nach einem der vorhergehenden Ansprüche, **dadurch gekennzeichnet, dass** es einen ersten Server (3a) umfasst, in dem die elektronischen Postfächer (6a, 6b) definiert sind, und einen zweiten Server (3b), der betriebswirksam mit dem ersten Server (3a) verbunden ist, umfassend ein Empfangsmodul (5), das zum Empfangen jeder von den elektronischen Postfächer (6a, 6b) kommenden Nachricht (2) ausgelegt ist, wobei das Empfangsmodul (5) aktiviert ist, um auf die Inhalte der Nachrichten (2) zuzugreifen; wobei jede Client-Schnittstelle (7) betriebswirksam mit dem zweiten Server (3b) verbunden ist, um die vom zweiten Server (3b) bereitgestellten und von den Postfächern (6a, 6b) durch das Empfangsmodul (5) kommenden Nachrichten (2) anzuzeigen.

10. Verwaltungssystem (1) nach Anspruch 9, **dadurch gekennzeichnet, dass** es zum Speichern des Inhaltsteils von nur einer der beiden Nachrichten (2) auf dem zweiten Server (3b) ausgelegt ist, wenn die Identifikationsinformation in Bezug auf die erste Nachricht (2a) und auf die zweite Nachricht (2b) übereinstimmt.

11. Verwaltungssystem (1) nach einem der vorhergehenden Ansprüche, **dadurch gekennzeichnet, dass** es zum Herunterladen des auf jeder Client-Schnittstelle (7) gespeicherten Teils des Inhalts ausgelegt ist.

12. Verfahren zum Verwalten des Austauschs von Nachrichten (2a, 2b), die jeweils einen Identifikationsteil und einen Inhaltsteil umfassen, in dem mindestens ein Server (3) mit mindestens zwei Client-Schnittstellen (7) kommuniziert, die mit ihm über ein Datenaustauschnetzwerk (8) verbunden sind, das die folgenden Schritte umfasst:
Empfangen einer ersten Nachricht (2a) in einem ersten Postfach (6a) von Nachrichten, das sich auf dem Server (3) befindet;
Empfangen einer zweiten Nachricht (2b), die sich von der ersten unterscheidet, in einem zweiten Postfach (6b) von Nachrichten, das sich auf dem Server (3) befindet und sich vom ersten Postfach unterscheidet;
Erfassen der Identifikationsinformation jeder Nachricht (2a, 2b), die für den Identifikationsteil der jeweiligen Nachricht (2a, 2b) repräsentativ ist;
Vergleichen der Identifikationsinformation der ersten Nachricht (2a) mit der Identifikationsinformation der zweiten Nachricht (2b);
wenn die Empfangsinformation in Bezug auf die erste Nachricht (2a) und auf die zweite Nachricht (2b) übereinstimmt, Speichern des Inhaltsteils von nur einer der beiden Nachrichten (2a, 2b) auf dem Server (3) und Machen des Inhaltsteils für jede Client-Schnittstelle (7) über den Server (3) und das Datenaustauschnetzwerk (8) zugänglich;
Zugreifen auf dieselbe Nachricht (2) auf dem Server (3) von jeder Client-Schnittstelle (7) und sie einem Benutzer anzeigbar machen;
**dadurch gekennzeichnet, dass** das Verfahren die folgenden Schritte umfasst:
Assoziieren eines Speicherregisters (9) mit der auf dem Server (3) empfangenen Nachricht (2), das eine Vielzahl an Daten enthält, die in Abhängigkeit von den von jeder Client-Schnittstelle (7) auf die Nachricht (2) ausgeführten Aktionen bestimmt werden, wobei das Speicherregister (9) für jede Client-Schnittstelle (7) die Daten in Bezug auf die von jeder Client-Schnittstelle (7) auf die Nachricht (2) ausgeführten Aktionen enthält; Machen des Speicherregisters (9) für jede Client-Schnittstelle (7) über das Datenaustauschnetzwerk (8) zugänglich;
Senden eines Änderungssignals (15) durch jede Client-Schnittstelle (7), das eine Änderung in einem im Speicherregister (9) enthaltenen Datenelement anzeigt, an den Server (3) in Abhängigkeit von den auf die Nachricht (2) ausgeführten Aktionen;
Lesen der Inhalte des Speicherregisters (9) und Modifizieren der Inhalte durch jede Client-Schnittstelle (7).

## Revendications

1. Système de gestion (1), pour l'échange de messages (2) comprenant chacun une partie d'identification et une partie de contenu, comprenant :
au moins un serveur (3) comprenant globalement au moins deux boîtes (6a, 6b) de messages (2) chacune associée à une adresse d'identification respective ; ledit serveur (3) étant conçu pour recevoir un premier message (2a) d'une première boîte (6a) et un second message (2b) d'une seconde boîte (6b) ;
au moins deux interfaces (7) clients fonctionnellement reliées au serveur (3) au moyen d'un réseau (8) d'échange de données et habilitées à accéder à la même boîte des deux boîtes (6a, 6b) de messages (2) au moyen du serveur (3) ; chaque interface (7) client étant conçue pour lire chaque message (2a, 2b) sur le serveur (3) ;
ledit système de gestion (1) étant conçu pour :
- détecter les informations d'identification de chaque message (2a, 2b) représentatives de la partie d'identification du message (2a, 2b) respectif ;
- comparer les informations d'identification du premier message (2a) avec les informations de réception du second message (2b) ;
- si les informations d'identification concernant le premier message (2a) et le second message (2b) correspondent, mémoriser la partie de contenu de seulement un des deux messages (2a, 2b) sur le serveur (3) et rendre accessible ladite partie de contenu mémorisée à chaque interface (7) client au moyen du réseau (8) d'échange de données ;
chaque interface (7) client étant conçue pour accéder au même message (2) sur le serveur (3) et le faire afficher à un utilisateur ;
**caractérisé en ce que** ledit système de gestion (1) est conçu pour: associer au message (2) reçu sur le serveur (3), un registre de mémoire (9) contenant une pluralité de données déterminées selon les actions exécutées par chaque interface (7) client sur le message (2) ;
rendre accessible ledit registre de mémoire (9) à chaque interface (7) client au moyen du réseau (8) d'échange de données ; dans lequel ledit registre de mémoire (9) contient pour chaque interface (7) client les données relatives aux actions exécutées par l'interface (7) client sur le message (2) ; et **en ce que** chaque interface (7) client est conçue pour :
envoyer un signal de modification (15), indiquant une modification dans un élément de donnée contenu dans le registre de mémoire (9), au serveur (3) selon les actions exécutées sur le message (2) ;
lire les contenus du registre de mémoire (9) et modifier les contenus.

2. Système de gestion (1) selon la revendication 1, **caractérisé en ce que** la partie d'identification d'un message (2a, 2b) est représentative de données concernant l'expéditeur et/ou de données concernant le moment de l'envoi et/ou de données concernant la localisation de l'envoi et/ou de données concernant l'objet du message (2a, 2b) et/ou de tout autre code d'identification associé au message (2a, 2b).

3. Système de gestion (1) selon l'une quelconque des revendications précédentes, **caractérisé en ce que** le système de gestion est conçu pour associer un code d'identification à chaque message (2a, 2b) ; ledit code d'identification dépendant des informations d'identification détectées.

4. Système de gestion (1) selon la revendication 3, **caractérisé en ce que** le système de gestion est conçu pour :
comparer le code d'identification du premier message (2a) avec le code d'identification du second message (2b) ;
si les codes d'identification correspondent, rendre accessible le contenu de l'un des deux messages (2a, 2b) à chaque interface (7) client au moyen du réseau (8) d'échange de données.

5. Système de gestion (1) selon l'une quelconque des revendications précédentes, **caractérisé en ce que** le système (1) est conçu pour mémoriser au moins une partie du contenu de l'un des deux messages sur le serveur (3), si les informations de réception concernant le premier message (2a) et le second message (2b) correspondent.

6. Système de gestion (1) selon la revendication 5, **caractérisé en ce que** le système (1) est conçu pour :
vérifier si l'adresse du message est présente dans une mémoire (13) de carnets d'adresses d'une interface (7) client ;
si l'adresse du message (2a, 2b) est présente dans la mémoire (13) de carnets d'adresses d'une interface (7) client, mémoriser au moins une partie du contenu de l'un des deux messages (2a, 2b) sur le serveur (3).

7. Système de gestion (1) selon l'une quelconque des revendications précédentes, **caractérisé en ce que** le système (1) est conçu pour :
détecter l'objet de chaque message (2a, 2b) ;
comparer l'objet d'un message (2a, 2b) à l'objet d'autres messages reçus précédemment, pour vérifier s'il y a des parties en commun ;
s'il y a des parties en commun, relier le message (2a, 2b) aux autres messages reçus précédemment pour créer une conversation.

8. Système de gestion (1) selon l'une quelconque des revendications précédentes, **caractérisé en ce que** chaque interface (7) client est conçue pour envoyer un signal partagé (11) au serveur pour partager le message (2a, 2b) avec au moins une autre interface (7) client n'étant pas associée à l'adresse du message (2a, 2b) ; ledit serveur (3) étant conçu pour recevoir le signal partagé (11) et pour rendre accessible le message correspondant (2a, 2b) à l'autre interface (7) client.

9. Système de gestion (1) selon l'une quelconque des revendications précédentes, **caractérisé en ce qu'**il comprend un premier serveur (3a) dans lequel les boîtes aux lettres électroniques (6a, 6b) sont définies et un second serveur (3b), fonctionnellement relié au premier serveur (3a), comprenant un module de réception (5) conçu pour recevoir chaque message (2) provenant des boîtes aux lettres électroniques (6a, 6b); ledit module de réception (5) étant en mesure d'accéder aux contenus des messages (2) ; chaque interface (7) client étant fonctionnellement reliée au second serveur (3b) pour afficher les messages (2) fournis par le second serveur (3b) et provenant des boîtes (6a, 6b) à travers le module de réception (5).

10. Système de gestion (1) selon la revendication 9, **caractérisé en ce qu'**il est conçu pour mémoriser la partie de contenu de seulement l'un des deux messages (2) sur le second serveur (3b) si les informations d'identification concernant le premier message (2a) et le second message (2b) correspondent.

11. Système de gestion (1) selon l'une quelconque des revendications précédentes, **caractérisé en ce qu'**il est conçu pour télécharger la partie du contenu mémorisée sur chaque interface (7) client.

12. Procédé de gestion d'échange de messages (2a, 2b), chacun comprenant une partie d'identification et une partie de contenu, dans lequel au moins un serveur (3) communique avec au moins deux interfaces (7) clients étant connectées à celui-ci au moyen d'un réseau (8) d'échange de données, comprenant les étapes suivantes :
recevoir un premier message (2a) dans une première boîte (6a) de messages située sur le serveur (3) ;
recevoir un second message (2b) étant différent du premier dans une seconde boîte (6b) de messages située sur le serveur (3) et différente de la première boîte ;
détecter les informations d'identification de chaque message (2a, 2b) représentatives de la partie d'identification du message (2a, 2b) respectif ;
comparer les informations d'identification du premier message (2a) avec les informations d'identification du second message (2b) ;
si les informations de réception concernant le premier message (2a) et le second message (2b) correspondent, mémoriser la partie de contenu de seulement un des deux messages (2a, 2b) sur le serveur (3) et rendre accessible ladite partie de contenu mémorisée à chaque interface (7) client au moyen du serveur (3) et du réseau (8) d'échange de données ;
accéder au même message (2) sur le serveur (3) par chaque interface (7) client et le faire afficher à un utilisateur ;
**caractérisé en ce que** le procédé comprend les étapes suivantes :
associer au message (2) reçu sur le serveur (3) un registre de mémoire (9) contenant une pluralité de données déterminées selon les actions exécutées par chaque interface (7) client sur le message (2) ; dans lequel ledit registre de mémoire (9) contient, pour chaque interface (7) client, les données concernant les actions exécutées par chaque interface (7) client sur le message (2) ; rendre accessible ledit registre de mémoire (9) à chaque interface (7) client au moyen du réseau (8) d'échange de données ;
envoyer un signal de modification (15) par chaque interface (7) client, indiquant une modification dans un élément de donnée contenu dans le registre de mémoire (9), au serveur (3) selon les actions exécutées sur le message (2) ;
lire les contenus du registre de mémoire (9) et modifier les contenus par chaque interface (7) client.
